# EUROPÄISCHE PATENTANMELDUNG

(11) **EP 3 667 113 A1**
(43) Veröffentlichungstag der Anmeldung: **17.06.2020**
(21) Anmeldenummer: 18211896.8
(22) Anmeldetag: 12.12.2018
(51) Int. Cl.: F16D 55/226, F16D 55/00

(54) **ABDECKBLECH FÜR EINE SCHEIBENBREMSE**

(71) Anmelder: WABCO Europe BVBA, 1170 Brüssel (BE)
(72) Erfinder: REDEMANN, Bernward, 68766 Hockenheim (DE); SCHERER, Vitalij, 69181 Leimen (DE); HECKER, Jannis, 69121 Heidelberg (DE)
(74) Vertreter: Copi, Joachim

(57) **Zusammenfassung**

Abdeckblech (1) für eine Scheibenbremse (2) zum Abdecken einer Montageöffnung (5) der Scheibenbremse (2), wobei die Scheibenbremse (2) einen Bremsträger (13) und einen auf dem Bremsträger (13), axial in Richtung einer Zuspannseite (Z) oder axial in Richtung einer Felgenseite (F), gleitenden Bremssattel (3) umfasst, wobei das Abdeckblech eine Kabelführung zur Fixierung eines Kabels aufweist.

## Beschreibung

Die Erfindung betrifft ein Abdeckblech für Scheibenbremsen, insbesondere für Scheibenbremsen von Nutzfahrzeugen nach dem Anspruch 1. Scheibenbremsen sind hinlänglich bekannt. Insbesondere im Nutzfahrzeugbereich müssen Scheibenbremsen auf Langlebigkeit und Sicherheit ausgebildet sein. Das heißt, dass möglichst wenige Bauteile der Scheibenbremse Umwelteinflüssen, wie Staub, Regen, Steinschlag oder Schnee ausgesetzt sein sollen. Für Servicearbeiten, bzw. für den Austausch von Bremsbelägen, weist die Scheibenbremse eine Öffnung im Bremssattel auf. Unter anderem sind die Bremsbeläge und die Bremsscheibe durch die Öffnung im Bremssattel vor Umwelteinflüsse nur bedingt geschützt. Insbesondere auf Schlechtwegen ist ein vorzeitiger Verschleiß oder sogar eine Beschädigung der Bremsbeläge oder der Bremsscheibe möglich, was zur Gefährdung der Betriebssicherheit des Fahrzeugs führt.

Um dem entgegen zu wirken, schlägt die DE 102009023104 A1 ein Abdeckblech mit radialen Ansätzen vor, welche die Montageöffnung radial übergreift und radial untergreift. Das Abdeckblech dient gleichzeitig als Belaghaltebügel sowie als Niederhaltefeder der Bremsbeläge und sichert die Bremsbeläge gegen ein radiales Herausfallen aus dem Belagträgerschacht des Bremsträgers der Scheibenbremse.

Eine weitere Ausführung eines Abdeckblechs geht aus der EP 2743533 B1 hervor. Das Abdeckblech liegt über zwei Kanäle an den Bremsbelägen auf. Zudem weist das Abdeckblech auf der Felgenseite zwei Öffnungen zur Aufnahme von Vorsprüngen des Belagträgers auf. Der Belaghaltebügel sichert das Abdeckblech und die Bremsbeläge gegen ein radiales Herausfallen aus der Scheibenbremse.
Auch die WO 2008060392 A3 zeigt ein Abdeckblech, das auf den Bremsbelägen aufliegt und gegen ein radiales Herausfallen aus der Scheibenbremse mit einem Belaghaltebügel gesichert ist.

In dem Fall, dass zusätzlich an beiden Bremsbelägen ein Sensor zum Detektieren von Zuständen der Bremsbeläge angeordnet werden soll, kann ein Abdeckblech für die Montageöffnung nicht angebracht werden. Das Kabel des Sensors für den felgenseitigen Bremsbelag muss über die Montageöffnung geführt werden. Aktuell wird das Kabel an dem Belaghaltebügel oder entlang des Belaghaltebügels geführt. Das heißt, sowohl das Abdeckblech, als auch das Sensorkabel teilen sich den gleichen Bauraum. Eine gleichzeitige Montage und Nutzung des felgenseitigen Sensors und des Abdeckblechs ist also nicht möglich.

Aufgabe der Erfindung ist es, ein Abdeckblech für eine Scheibenbremse bereit zu stellen, welche die Nachteile aus dem zuvor genannten Stand der Technik überwindet.

Die Aufgabe wird durch ein Abdeckblech mit einer Kabelführung zur Fixierung eines Kabels gelöst. Die Kombination des Abdeckblechs und der Kabelführung für einen Belagverschleißsensor reduziert die Teileanzahl einer Scheibenbremse. Weiterhin wird das in der Kabelführung angeordnete Kabel durch das Abdeckblech besser vor auftretender Wärme geschützt. Die Wärme entsteht insbesondere während eines Bremsvorgangs beim Zuspannen der Bremsscheibe mit Bremsbelägen. Eine zu hohe Wärme kann das Kabel des Belagverschleißsensors beschädigen und die Stromführung einschränken oder sogar ganz unterbrechen, was zur Folge hat, dass eine Detektion der Bremsbelagstärke nur noch bedingt oder nicht mehr erfolgen kann. Ein nicht detektierter verschlissener Bremsbelag führt zur Beschädigung der Bremsscheibe, da der Belagträger, bestehend aus Metall oder einem anderen Werkstoff, mit der Bremsscheibe in Kontakt kommt.

In einer weiteren Ausführung ist die Kabelführung ein in dem Abdeckblech versenkter Kabelkanal. Der Vorteil an dem versenkten Kabelkanal ist, dass das Kabel zusätzlich vor Umwelteinflüssen, wie Gesteinsmaterial geschützt ist. Das Kabel ist auch während der Montage und Demontage der Scheibenbremse gegen einen Kabelbruch besser geschützt, da das Kabel nicht frei auf dem Abdeckblech angeordnet ist.

Der Kabelkanal ist vorteilhaft in der Breite variabel. Das heißt, dass je nach Kabelanzahl oder der Breite des Kabels ein geeigneter Kabelkanal ausgewählt wird.

Vorteilhaft weist die Kabelführung in einer weiteren Ausgestaltung eine Aneinanderreihung von Fixierungselementen auf. Die Fixierungselemente können in dem Kabelkanal als zusätzliche Fixierungselemente zum Halten des Kabels angeordnet sein. Es ist auch denkbar, dass die Kabelführung allein, ohne einen Kabelkanal, durch die Fixierungselemente gebildet wird.

Die Fixierungselemente sind in einer weiteren Ausgestaltung direkt aus dem Abdeckblech mittels eines Umformprozesses gebildet. Zusätzliches Material oder zusätzliche Bauteile sind zur Ausgestaltung der Fixierungselemente nicht notwendig. Die Fixierungselemente können aus dem Abdeckblech geformte Nasen sein, die mit einem Abstand zueinander angeordnet sind. Der Abstand zwischen den Nasen und die Anzahl der Nasen können variabel ausgestaltet sein. Das Kabel wird für eine Fixierung an dem Abdeckblech abwechselnd über zumindest eine Nase und unter zumindest eine Nase geführt.

In einer weiteren Ausgestaltung ist die Kabelführung, ausgehend von der Zuspannseite in Richtung der Felgenseite, in Form eines Labyrinths oder geradlinig ausgebildet. Mit der Labyrinthkabelführung wird das Kabel straff und schwer lösbar an dem Abdeckblech fixiert. Insbesondere eignet sich der Einsatz einer Labyrinthkabelführung, wenn das Kabel z.B. bauraumbedingt, ausgehend von der Bremsscheibeneinlaufseite und der Zuspannseite der Scheibenbremse, an der Bremsscheibenauslaufseite der Felgenseite der Scheibenbremse angeordnet werden soll. Als Bremsscheibeneinlaufseite ist die Seite der Scheibenbremse zu verstehen in der die Bremsscheibe während einer Bewegung um die eigene Achse in dem Bremssattel einläuft. Als Bremsscheibenauslaufseite ist diejenige Seite der Scheibenbremse definiert, an der die Bremsscheibe während einer Umdrehung um die eigene Achse aus dem Bremssattel ausläuft. Bei einem schrägen Verlauf der Kabelführung, ausgehend von der Zuspannseite der Scheibenbremse hin zur Felgenseite der Scheibenbremse, würde das Kabel zu straff in der Kabelführung angeordnet sein, was zu einer vorzeitigen Beschädigung, z.B. hervorgerufen durch einen Kabelriss wegen zu hoher Spannungen im Kabel, führen kann.

Weiterhin ist die Kabelführung in einer weiteren Ausführung vorteilhaft im Bereich eines Belaghaltebügels angeordnet. Die Belagverschleißsensoren sind in der Regel mittig in den Bremsbelägen angeordnet. Eine Anordnung der Kabelführung an dem Abdeckblech außerhalb des Bereichs des Belaghaltebügels ist auch denkbar, würde jedoch bedeuten, dass sowohl ein längeres Kabel, als auch eine längere Kabelführung notwendig sind.

Wie in den Ausführungsbeispielen bereits erwähnt, ist das Kabel in einer besonders bevorzugten Ausgestaltung ein Belagverschleißsensorkabel eines Belagverschleißssensors zum Detektieren der Belagstärke der Bremsbeläge. Bei dem Bremsbelagverschleißsensor handelt es sich bevorzugt um einen sogenannten Schwarz-/ Weißsensor, der an dem felgenseitigen Bremsbelag der Scheibenbremse angeordnet ist. Das Kabel ist mit dem Schwarz-/ Weißsensor verbunden. An dem Kabel liegt eine Spannung an. Sobald die Bremsscheibe das Kabel des Belagverschleißssensors durchtrennt, wird die Spannung unterbrochen und eine Steuereinheit auf der Zuspannseite der Scheibenbremse detektiert, dass der Bremsbelag getauscht werden muss.

In einer weiteren Ausführung ist das Abdeckblech ein Blechumformteil. Blech lässt sich sehr gut umformen, schneiden und bohren. Insbesondere bei der Ausgestaltung der Kabelführung als Kabelkanal oder der Ausgestaltung der Nasen für die Fixierung des Kabels ist eine einfache Bearbeitung des Abdeckblechs vorteilhaft. Der Kabelkanal für die Kabelführung kann gestanzt werden und die Nasen können nach dem Stanzvorgang anschließend durch umformen sehr einfach in die gewünschte Richtung gebogen werden.

Zur Anordnung des Abdeckblechs an einem Bremssattel der Scheibenbremse weist das Abdeckblech in einer weiteren Ausführung zumindest Abstützelemente und Sicherungselemente zur Fixierung des Abdeckblechs an dem Belaghaltebügel auf.

In einer weiteren Ausgestaltung sind die Sicherungselemente des Abdeckblechs, gegenüber Haltestreben des Abdeckblechs radial in Richtung der Bremsscheibe versenkt. In dem Abdeckblech werden Aussparungen ausgestanzt, sodass die Haltestreben stehen bleiben. Das Abdeckblech kann aber auch direkt an dem Bremssattel, beispielsweise über eine Feder-/Nutverbindung, fixiert werden. Weiterhin ist es denkbar, dass an der Bremsscheibeneinlaufseite des Abdeckblechs und an der Bremsscheibenauslaufseite des Abdeckblechs Vorsprünge angeordnet sind, die über die Montageöffnung in den Bremssattel greifen und das Abdeckblech gegen ein radiales Herausfallen aus dem Bremssattel fixieren.

In einer weiteren Ausgestaltung weist das Abdeckblech Schrauben zur Fixierung an der Scheibenbremse auf. Das Abdeckblech kann mittels der Schrauben direkt an dem Belaghaltebügel oder auch an dem Bremssattel fixiert werden. Besonders bevorzugt sind Haltestreben zur Aufnahme des Abdeckblechs gegen ein radiales Herausfallen aus dem Bremssattel angeordnet. Zusätzlich zu den Haltestreben sind an den Haltestreben Schrauben angeordnet, die das Abdeckblech gegen eine vertikale Bewegung sichern.

Die Schrauben fixieren das Abdeckblech in einer weiteren Ausführung an dem Belaghaltebügel. Eine gesonderte Bearbeitung des Bremssattels durch einbringen von Bohrlöchern zur Aufnahme der Schrauben wird vermieden.

Die Aufgabe wird weiterhin durch eine Scheibenbremse mit einem Abdeckblech nach einer der vorangegangenen Ausführungen gelöst.

Es zeigt:
Fig.1 eine Scheibenbremse mit einem Abdeckblech in einer seitlich gedrehten Ansicht,
Fig. 2 eine Scheibenbremse mit einem Abdeckblech und einem Sensorkabel aus einer Draufsicht,
Fig. 3 ein Abdeckblech mit einer Kabelführung,
Fig. 4 eine geschnittene Seitenansicht einer Scheibenbremse mit einem Abdeckblech.

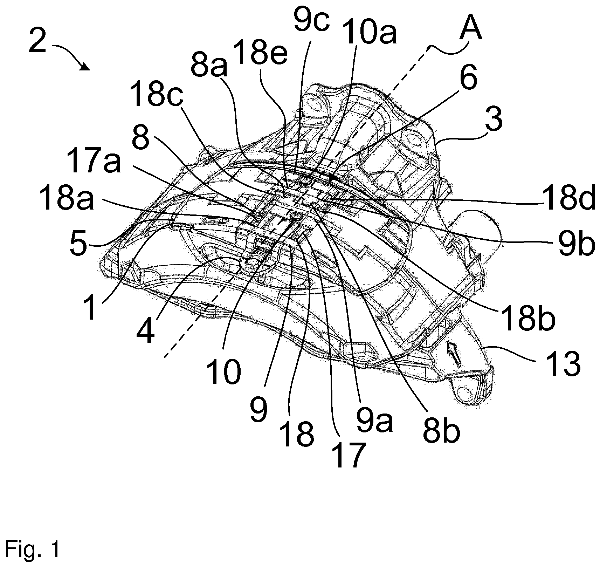

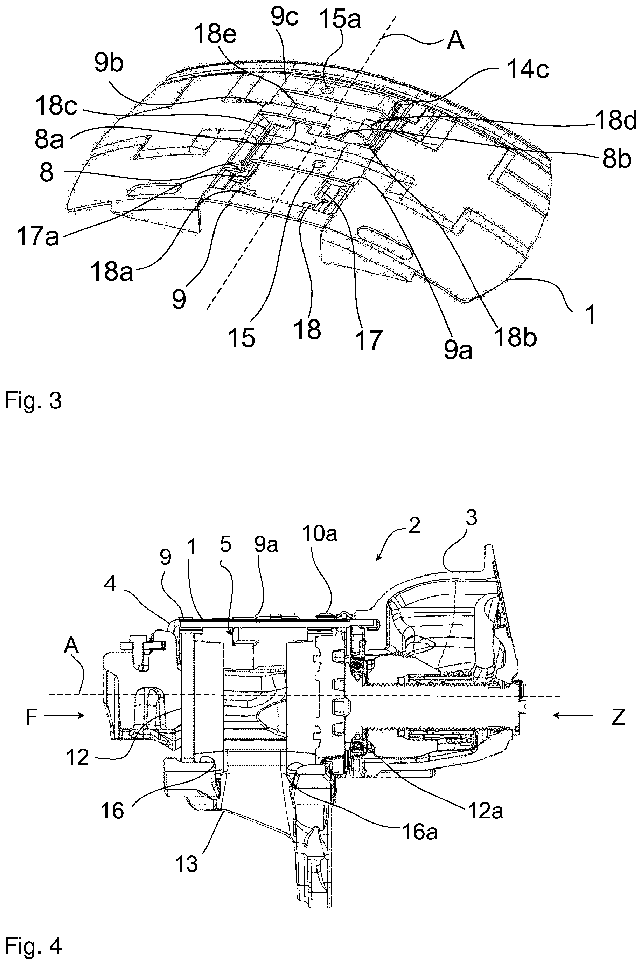

Fig. 1 zeigt eine Scheibenbremse 2 mit einem erfindungsgemäßen Abdeckblech 1. In dem Abdeckblech 1 ist eine Kabelführung 6 integriert. Das Abdeckblech 1 überdeckt eine Montageöffnung 5 eines Bremssattels 3 zur Entnahme und zum Einbau von Bremsbelägen 12, 12a. Die Bremsbeläge 12, 12a sind in Fig. 4 dargestellt. Der Bremssattel 3 ist auf einem Bremsträger 13 angeordnet, wobei der Bremssattel 3 axial entlang der Scheibenbremsenachse A verschiebbar auf dem Bremsträger 13 gelagert ist. Darüber hinaus ist das Abdeckblech 1 radial, in Bezug auf eine Scheibenbremsenachse A, an dem Bremssattel 3 angeordnet. Zur Fixierung des Abdeckblechs 1 an der Scheibenbremse 2 weist das Abdeckblech 1 sogenannte Haltestreben 9, 9a, 9b, 9c auf. Die Haltestreben 9, 9a, 9b, 9c und die Kabelführung 6 sind mittels Umformverfahren und Stanzverfahren aus dem Abdeckblech 1 geformt. Die Haltestreben 9, 9a, 9b, 9c verlaufen koaxial entlang der Scheibenbremsenachse A. Ein Belaghaltebügel 4 sichert die Bremsbeläge 12, 12a gegen ein radiales Herausfallen aus einem Bremsbelagträgerschacht 16, 16a (siehe Fig. 4) des Bremsträgers 13. Die Haltestreben 9, 9a, 9b, 9c überspannen den Belaghaltebügel 4. Zwei Schrauben 10, 10a sichern das Abdeckblech 1 zusätzlich gegen eine radiale Bewegung in Bezug auf die Scheibenbremsenachse A. Die Schraube 10 ist über eine Bohrung 15 in der Haltestrebe 9a mit dem Belaghaltebügel 4 verbunden. Die zweite Schraube 10a ist über eine Bohrung 15a in der Haltestrebe 9c mit dem Belaghaltebügel 4 verbunden. Die Bohrung 15 der Haltestrebe 9a und die Bohrung 15a der Haltestrebe 9c sind in Fig. 3 dargestellt. Zwischen den Haltestreben 9, 9a, 9b, 9c ist ein Fixierungslement 8 als Kabelführung 6 an dem Abdeckblech 1 und zwei weitere Fixierungselemente 8a, 8b sind an den Haltestreben 9a, 9b angeordnet. Abstützelemente 17, 17a des Abdeckblechs 1 greifen unter den Belaghaltebügel 4 und sichern das Abdeckblech 1, entgegengesetzt der Bremsscheibe, in radialer Richtung. Mittels Sicherungselementen 18, 18a, 18b, 18c, 18d, 18e stützt sich das Abdeckblech 1 in tangentialer Richtung an dem Belaghaltebügel 4 ab.

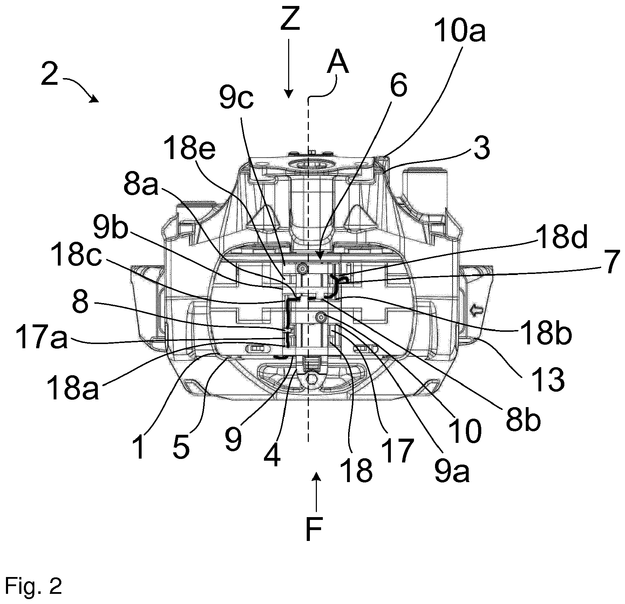

Fig. 2 zeigt die Scheibenbremse 2 nach Fig. 1 in der Draufsicht. In Fig. 2 ist zusätzlich ein Kabel 7 in der Kabelführung 6 des Abdeckblechs 1 angeordnet. Das Kabel 7 ist ein Belagverschleißsensorkabel und axial entlang der Scheibenbremsenachse A, von einer Zuspannnseite Z der Scheibenbremse 2 in Richtung einer Felgenseite F der Scheibenbremse 2, in der Kabelführung 6 angeordnet. Das Kabel 7 ist labyrinthartig zwischen den Fixierungselementen 8, 8a, 8b eingeklemmt.

Fig. 3 zeigt das Abdeckblech nach Fig. 1 und Fig.2 im Detail. Insbesondere ist die Bohrung 15 in der Haltestrebe 9a zur Fixierung der Schraube 10 und die Bohrung 15a in der Haltestrebe 9c zur Fixierung der Schraube 10a sichtbar. Insbesondere ist die Anordnung der Sicherungselemente 18, 18a, 18b, 18c, 18d, 18e und die Anordnung der Abstützelemente 17, 17a erkennbar.

Fig. 4 zeigt die Scheibenbremse 1 in einer seitlich geschnittenen Ansicht. Fig. 4 verdeutlicht noch einmal die Überdeckung der Montageöffnung 5 durch das Abdeckblech 1, wodurch die Bremsbeläge 12, 12a und die zwischen den Bremsbelägen 12, 12a angeordnete, aber nicht gezeigte Bremsscheibe gegen Umwelteinflüsse, wie Staub oder Schnee geschützt werden.

### Bezugszeichenliste als Teil der Beschreibung

- 1: Abdeckblech
- 2: Scheibenbremse
- 3: Bremssattel
- 4: Belaghaltebügel
- 5: Montageöffnung
- 6: Kabelführung
- 7: Kabel
- 8-8b: Fixierungselemente
- 9-9c: Haltestreben
- 10, 10a: Schrauben
- 12, 12a: Bremsbeläge
- 13: Bremsträger
- 15: Bohrung der Haltestrebe 9a
- 15a: Bohrung der Haltestrebe 9c
- 16, 16a: Bremsbelagträgerschacht
- 17-17a: Abstützelemete des Abdeckblechs 1
- 18-18e: Sicherungselemente des Abdeckblechs 1
- A: Scheibenbremsenachse
- F: Felgenseite
- Z: Zuspannseite

## Patentansprüche

1. Abdeckblech (1) für eine Scheibenbremse (2) zum Abdecken einer Montageöffnung (5) der Scheibenbremse (2), wobei die Scheibenbremse (2) einen Bremsträger (13) und einen auf dem Bremsträger (13), axial in Richtung einer Zuspannseite (Z) oder axial in Richtung einer Felgenseite (F), gleitenden Bremssattel (3) umfasst, **dadurch gekennzeichnet, dass** das Abdeckblech (1) eine Kabelführung (6) zur Fixierung eines Kabels (7) aufweist.

2. Abdeckblech (1) nach Anspruch 1, **dadurch gekennzeichnet, dass** die Kabelführung (6) ein in dem Abdeckblech (1) versenkter Kabelkanal ist.

3. Abdeckblech (1) nach Anspruch 1 oder 2, **dadurch gekennzeichnet, dass** die Kabelführung (6) eine Aneinanderreihung von Fixierungselementen (8, 8a, 8b) aufweist.

4. Abdeckblech (1) nach Anspruch 3, **dadurch gekennzeichnet, dass** die Fixierungselemente (8, 8a, 8b) aus dem Abdeckblech (1) gebildet sind.

5. Abdeckblech (1) nach einem der vorangegangenen Ansprüche, **dadurch gekennzeichnet, dass** die Kabelführung (6) in Form eines Labyrinths oder geradlinig ausgebildet ist.

6. Abdeckblech (1) nach einem der vorangegangenen Ansprüche, **dadurch gekennzeichnet, dass** die Kabelführung (6) im Bereich eines Belaghaltebügels (4) angeordnet ist.

7. Abdeckblech (1) nach einem der vorangegangenen Ansprüche, **dadurch gekennzeichnet, dass** das Kabel (7) ein Belagverschleißsensorkabel eines Belagverschleißsensors zum Detektieren einer Belagstärke von Bremsbelägen (12, 12a) ist.

8. Abdeckblech (1) nach einem der vorangegangenen Ansprüche, **dadurch gekennzeichnet, dass** das Abdeckblech (1) ein Blechumformbauteil ist.

9. Abdeckblech (1) nach Anspruch 6, **dadurch gekennzeichnet, dass** das Abdeckblech (1) Abstützelemente (17, 17a) und Sicherungselemente (18, 18 a, 18b, 18c, 18d, 18e) zur Fixierung des Abdeckblechs (1) an dem Belaghaltebügel (4) aufweist.

10. Abdeckblech (1) nach Anspruch 8, **dadurch gekennzeichnet, dass** die Sicherungselemente (18, 18 a, 18b, 18c, 18d, 18e) gegenüber Haltestreben (9, 9a, 9b, 9c) des Abdeckblechs 1 in radialer Richtung versenkt sind.

11. Abdeckblech (1) nach einem der vorangegangenen Ansprüche, **dadurch gekennzeichnet, dass** das Abdeckblech (1) Schrauben (10, 10a) zur Fixierung des Abdeckblechs (1) an der Scheibenbremse (2) aufweist.

12. Abdeckblech (1) nach Anspruch11, **dadurch gekennzeichnet, dass** die Schrauben (10, 10a) im Bereich der Kabelführung (6) angeordnet sind.

13. Scheibenbremse (2) mit einem Abdeckblech (1) zum Abdecken einer Montageöffnung (5) der Scheibenbremse (2), wobei die Scheibenbremse (2) einen Bremsträger (13) und einen auf dem Bremsträger (13), axial in Richtung einer Zuspannseite (Z) oder axial in Richtung einer Felgenseite (F), gleitenden Bremssattel (3) umfasst, **dadurch gekennzeichnet, dass** das Abdeckblech (1) nach einem der Ansprüche 1 bis 12 ausgebildet ist.
